# EUROPEAN PATENT APPLICATION

(11) **EP 4 140 587 A1**
(43) Date of publication of application: **01.03.2023**
(21) Application number: 22192830.2
(22) Date of filing: 30.08.2022
(51) Int. Cl.: B01L 3/00, B01F 33/00

(54) **PARTICLE DETECTION DEVICE AND OPERATION METHOD**

(30) Priority: 30.08.2021 CN 202122069758 U; 30.08.2021 CN 202111006391
(71) Applicant: Shanghai Ruiyu Biotech Co. Ltd., Shanghai 201619 (CN)
(72) Inventor: Luo, Puwen, Shanghai, 201619 (CN); Chen, Kai, Shanghai, 201619 (CN)
(74) Representative: Wang, Bo

(57) **Abstract**

A particle detection device is provided. The particle detection device may include a substrate and at least one detection unit setting on the substrate. The at least one detection unit may include: a detection pool, configured to accommodate a sample liquid; a sample injection part communicating the detection pool, the sample injection part being sealable with a liquid driving device, wherein the liquid driving device and the sample injection part cooperate to enable the sample liquid to get in and out of the detection pool

## Description

### CROSS-REFERENCE TO RELATED APPLICATIONS

This application claims priority of Chinese Patent Application No. 202111006391.4, filed on August 30, 2021, and Chinese Patent Application No. 202122069758.9, filed on August 30, 2021, the contents of each of which are incorporated herein by reference in their entirety.

### TECHNICAL FIELD

The present disclosure relates to the field of biological testing technology, and specially relates to a particle detection device and operation method.

### BACKGROUND

The particle detection device may be used for a biological sample detection, using a unique marker to detect or separate a target object to be detected in a biological sample. The particle detection device may be widely used in the fields of clinical testing, drug analysis, environmental monitoring, and other fields according to different suitable markers in the target object of the sample.

### SUMMARY

One of the embodiments of the present disclosure provides a particle detection device, including a substrate and at least one detection unit setting on the substrate. The at least one detection unit comprises: a detection pool, configured to accommodate a sample liquid; a sample injection part communicating the detection pool, the sample injection part being sealable with a liquid driving device, wherein the liquid driving device and the sample injection part cooperate to enable the sample liquid to get in and out of the detection pool.

In some embodiments, the sample injection part includes a sample injection channel and a sample injection port, the sample injection port communicating the detection pool through the sample injection channel.

In some embodiments, an inner diameter of the sample injection channel gradually decreases along a direction from the sample injection port to the detection pool.

In some embodiments, an inner contour surface of the sample injection channel is cone-shaped.

In some embodiments, the substrate includes a first board and a second board; the detection pool is configured on the second board; the sample injection port is configured on the first board; and the sample injection channel is configured on the first board, or the sample injection channel is configured on the first board and the second board.

In some embodiments, an axis of the sample injection channel forms a 20-60° angle with the first board.

In some embodiments, the first board and the second board are sealed, the detection pool is between the first board and the second board, the sample injection channel communicates with the detection pool and the sample injection port.

In some embodiments, the shape of a cross-section parallel to the first board of the sample injection port is oval or circular.

In some embodiments, a length of a short axis of an oval cross-section of the sample injection port is 0.5mm-4mm.

In some embodiments, the sample injection port protrudes from the first board.

In some embodiments, the height of the sample injection port protruding from the first board is 0.5mm-3mm.

In some embodiments, the length of the sample injection channel is greater than 1mm.

In some embodiments, the sample injection part further includes an elastomer sealing part, wherein the elastomer sealing part is provided with a through hole, and the elastomer sealing part is installed on the sample injection channel and/or the sample injection port.

In some embodiments, a depth of the detection pool is less than 2mm.

In some embodiments, a marker is pre-embedded in the sample injection part and/or the detection pool, wherein through the cooperation of the liquid driving device and the sample injection part, at least a part of the marker may be mixed with the sample liquid which gets in and out of the detection pool.

In some embodiments, an operation method of the particle detection device is provided. The method may include introducing the sample liquid to the detection pool through the sample injection part; providing a liquid driving force by connecting the liquid driving device with the sample injection part in a sealed state to enable at least a part of the sample liquid to get in and out of the detection pool repeatedly; and driving the sample liquid to the detection pool again through an auxiliary driver.

In some embodiments, a driving force output part of the liquid driving device is inserted into and pressed against the sample injection part, so that the liquid driving device is connected with the sample injection part in the sealed state.

In some embodiments, the liquid driving device drives the at least a part of the sample liquid to repeatedly get in and out of the detection pool for at least once, so that the sample liquid is mixed with at least a part of a marker pre-embedded in the sample injection part and/or a sample injection pool.

In some embodiments, the liquid driving device is a device with a positive and negative pressure control selected from the group consisting of a pipette, a syringe, and an ear wash ball

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a three-dimensional (3D) structure diagram illustrating a particle detection device according to some embodiments of the present disclosure;
FIG. 2 is a front view of a first board of the particle detection device according to some embodiments of the present disclosure, wherein the particle detection device may be provided with a plurality of detection units;
FIG. 3 is a front view of a particle detection device according to some embodiments of the present disclosure;
FIG. 4 is a cross-section view of the A-A direction in FIG. 3;
FIG. 5 is an enlarged schematic diagram of B in FIG. 4;
FIG. 6 to FIG. 11 are cross-section views of the sample injection parts of the particle detection devices according to some embodiments of the present disclosure;
FIG. 12 is a cross-section view of the particle detection device according to some embodiments of the present disclosure; and
FIG. 13 is a cross-section view of the particle detection device according to some embodiments of the present disclosure.

In the figures: 100-first board, 200-second board, 300-detection unit, 310-detection pool, 320-sample injection part, 321-sample injection port, 322-sample injection channel, 323-convex margin, 324-elastic sealing part, 325-plunger, 326-plunger cavity, 326a-first plunger cavity, 326b-second plunger cavity, 327-separator valve, 328-seal plug, 329-hybrid channels, 330-exhaust port.

### DETAILED DESCRIPTION

The exemplary embodiments or implementing method will be explained in detail here, its examples are represented in the attached drawings. In the following descriptions involving the drawings, unless otherwise indicated, the same counts in different drawings indicate the same or similar elements. The implementing method described in the following exemplary embodiment does not represent all the implementing methods consistent with the present disclosure. On the contrary, they are merely examples of apparatus and methods consistent with some aspects of the present disclosure as recited in the appended claims.

The terms used in the present disclosure are merely for the purpose of describing specific embodiments, and are not intended to limit the present disclosure. The singular forms like "one kind", "this", "the" and other similar used in the present disclosure and the appended claims may also include the plural forms unless the other meanings are indicated clearly in the context.

It should be understood that the "first," "second," and other similar words used in the present disclosure and the claims do not represent any order, count, or significance, but are only used to distinguish different components. Likewise, words such as "a" or "an" do not denote a quantitative limitation, but rather denote the presence of at least one. Unless otherwise indicated, terms such as "front," "rear," "lower," and/or "upper" are for the convenience of description and are not limited to one location or one spatial orientation. "Comprises" or "comprising" and similar words mean that the elements or items listed before "including" or "including" cover the elements or items listed after "including" or "including" and their equivalents, and do not exclude other elements or object.

According to different markers and target objects to be detected, the application scenarios of the particle detection device may roughly include: 1) a clinical testing. For example, a combination of specific dyes and cells may be used for a cell identification, a cell counting, a cell viability detection, a cyclical testing, an apoptosis test, etc.; chemiluminescence related substances may be used to mark antibodies or antigens, after reacting with the antigens or antibodies to be tested, chemiluminescent markers in free state may be separated and join other relevant substances of the chemiluminescence system to react for quantitative or qualitative immunodetections on the antigens or antibodies. 2) Drug analysis. For example, a specific detection reagent may be used as a marker, which may be mixed with biological samples such as blood samples and urine samples to detect pharmaceutical ingredients and concentrations in the biological samples. 3) Environmental monitoring. For example, specific dyes which may have detectable changes when one or more microorganisms exist may be used to perform detection and quantification of the microorganisms in environmental biological samples.

To observe and/or detect a micro sample in the particle detection device, a thickness of a detection pool of the particle detection device and an inner diameter of a flow channel may generally be between dozens to hundreds of microns. Once a sample liquid enters the detection pool of the particle detection device, it may be difficult to export it. Therefore, it is necessary to provide a particle detection device that can quickly export or absorb the sample liquid from the detection pool. The particle detection device according to some embodiments of the present disclosure may quickly export or absorb the sample liquid from the detection pool through configuring a sample injection part to perform a sealed cooperation with a liquid driving device.

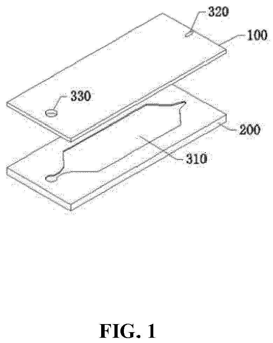

The following will perform detailed explanations on the particle detection device and its operation methods according to some embodiments of the present disclosure in combination with FIGs. 1-13. It is worth noting that the following embodiments are only used to explain the present disclosure, and it do not constitute a limitation thereof.

In some embodiments, the particle detection device may include a substrate and one or more detection units 300 configured on the substrate, each detection unit 300 may include a detection pool 310 and a sample injection part 320 communicating with the detection pool 310. The sample injection part 320 may be a main structure to cooperate with the liquid driving device to import and/or export the sample liquid. The particle detection device may import the sample liquid to be detected into the detection pool 310 through the sealed cooperation between the sample injection part 320 and the liquid driving device, and may further export or absorb the sample liquid from the detection pool 310 through the sample injection part 320 and the liquid driving device.

The substrate may be a main structure of the particle detection device. The substrate may be an integrated structure or a multi-layer-connected structure. In some embodiments, to facilitate processing and manufacturing, as shown in FIGs. 1-2, the substrate may include a first board 100 and a second board 200, and at least a part of the detection unit 300 may be arranged between the first board 100 and the second board 200. Further, in some embodiments, the first board 100 and the second board of the substrate may be sealed. For example, the first board 100 and the second board 200 may be sealed through laser welding, ultrasonic welding, plasma processing, etc.

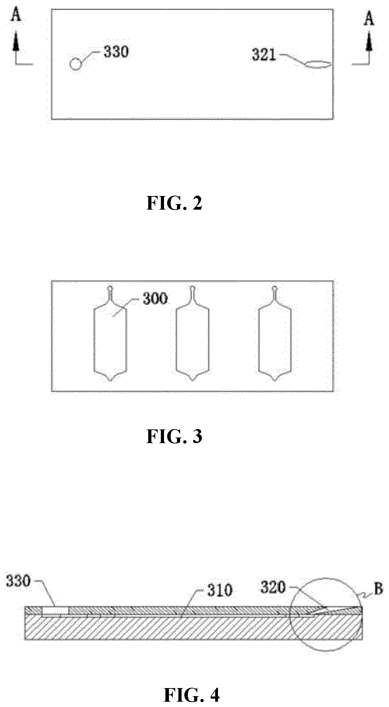

The detection unit 300 may be a set of structures or parts on the substrate that cooperate with each other to complete a pre-detection. In some embodiments, a detection unit 300 may be arranged on the substrate. In some embodiments, as shown in FIG. 3, a plurality of detection units 300 may be arranged on the substrate, so that the particle detection device may complete detections on a plurality of samples at the same time, or complete a plurality of detections on one sample. Considering that the detection device is a disposable consumable, to facilitate a calculation experiment design and a consumables consumption control, and at the same time, taking the convenience of use and the limitation of the substrate size into account, 1-10 detection units 300 may be preferably arranged on the substrate.

The detection pool 310 may accommodate the sample liquid, and may be the main place for optical detection. The sample liquid may be collected within the detection pool 310, and the optical detection device may perform detection on the sample liquid through the detection pool 310. In some embodiments, the detection pool 310 may be configured on the second board 200, and through the seal of the first board 100 and the second board 200, the detection pool 310 between the first board 100 and the second board 200 may form a relatively enclosed detection environment. In some embodiments, the first board 100 and/or the second board 200 are configured to allow light transmission to the detection pool 310, and may allow the optical detection device to detect the light in the detection pool 310. In some embodiments, the depth of the detection pool 310 may be preferred to be less than 2mm. The preferred depth of the detection pool 310 may avoid the overlap of the objects to be detected in the depth direction of the detection pool 310 in the sample liquid to ensure the accuracy of the detection.

The sample liquid to be detected may be imported and exported/suctioned out of the detection pool 310 through the sample injection part 320. In some embodiments, the sample injection part 320 may be sealed with the liquid driving device, the liquid driving device and the sample injection part 320 may cooperate with each other and may be used to enable the sample liquid to enter and exit the detection pool 310. Specifically, as the injection part 320 is sealed with the liquid driving device, the liquid driving force provided by the liquid driving device may be effectively applied to the sample liquid entering the detection unit 300, and the sample liquid may enter and exit the detection pool 310 repeatedly under the effect of the liquid driving force. In some embodiments, the liquid driving device may be one of a pipette, a syringe and an ear wash ball. Preferably, the liquid driving device may be a pipette. Specifically, the liquid driving device may have the function of accurately measuring the sample liquid, and it may provide a liquid driving force to achieve the entering and exiting of the sample liquid; or the liquid driving device may not have the function of accurately measuring the sample liquid, but it may provide liquid driving force to achieve the entering and exiting of the sample liquid.

In some embodiments, the sample injection part 320 may include a sample injection channel 322 and a sample injection port 321, and the sample injection port 321 may directly or indirectly communicate with the detection pool 310 through the sample injection channel 322. The sample injection port 321 and the sample injection channel 322 may allow a driving force output part of the liquid driving device to insert into the sample injection part 320, and form a seal on the driving force output part. For example, the liquid driving device may be the pipette, and its driving force output part is a pipette tip. The sample injection port 321 and the sample injection channel 322 may allow the pipette tip to insert into the sample injection part 320 and seal the pipette tip.

To achieve the sealing effect, the sample injection part 320 may fit the driving force output part of the liquid driving device. Specifically, at least a part of the inner contour surface of the sample injection channel may fit the outer wall of the driving force output part of the liquid driving device. Further, the overall inner contour surface of the sample injection channel may fit the outer wall of the driving force output part of the liquid driving device, and the inner contour surface of the sample injection port may fit the outer wall of the driving force output part of the liquid driving device.

In some embodiments, the inner contour surface of the sample injection channel 322 may be a circular tube. Specifically, for the liquid driving device whose driving force output part has a cylindrical outer wall, the tubular inner contour surface of the sample injection channel 322 may fit the outer wall of the driving force output part of the liquid driving device close to the output port. For example, the outer wall of the injection head of the syringe may be a cylindrical surface, and the tubular inner contour surface of the sample injection channel 322 may fit the outer wall of the injection head of the syringe close to the injection port.

In some embodiments, as shown in FIG. 4, the inner diameter of the sample injection channel 322 may gradually decrease along the direction from the sample injection port 321 to the detection pool 310. In some embodiments, further, the inner contour surface of the sample injection channel 322 may be cone-shaped. Specifically, for the liquid driving device with the outer wall of the driving force output part being a conical surface, the sample injection channel 322 whose inner diameter gradually decreases may fit the outer wall of the driving force output part of the liquid driving device close to the output port, especially when the inner contour surface of the channel is cone-shaped. For example, the outer wall of the pipette tip of the pipette may be a cone-shaped surface, and the cone-shaped inner contour surface of the sample injection channel 322 may fit the outer cone-shaped surface of the pipette tip of the pipette near a liquid port. The sample injection channel 322 with the cone shaped inner contour surface may be preferred.

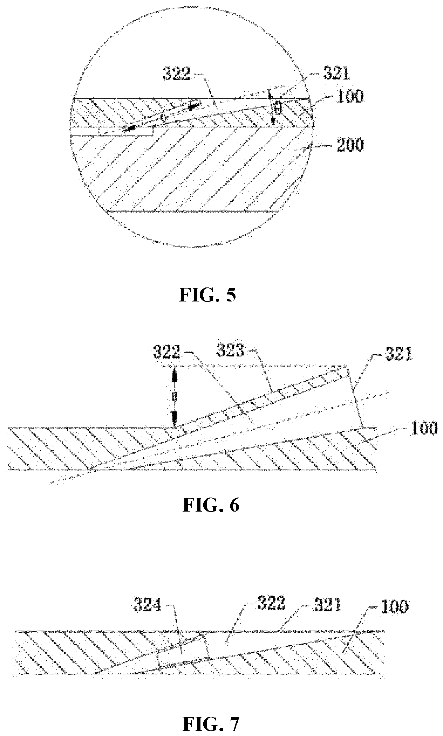

The length of the sample injection channel 322 may affect the fitting effect between the sample injection part 320 and the driving force output part of the liquid driving device. It should be noted that the length of the sample injection channel 322 refers to the shortest distance on the inner contour surface of the sample injection channel 322, as the length D shown in FIG. 5. In some embodiments, the length of the sample injection channel 322 may be greater than 1 mm.

The position and setting method of the sample injection channel 322 may affect the fitting effect between the sample injection part 320 and the driving force output part of the liquid driving device.

In some embodiments, as shown in FIG. 4, the sample injection port 321 and the sample injection channel 322 may be arranged on the first board 100. In some embodiments, the sample injection port 321 may be arranged on the first board 100; the sample injection channel 322 may be arranged on the first board 100 and the second board 200. Specifically, some cross-sections of the sample injection channel 322 may be formed on the first board 100, and the remaining parts of the sample injection channel 322 may be formed on the second board 200, the first board 100 may connect with the second board 200 to form a whole sample injection channel 322. In some embodiments, to ensure the length of the sample injection channel 322, thereby improving the sealing effect, the sample injection channel 322 may be obliquely arranged on the first board 100. Specifically, as shown in FIG. 5, the axis of the sample injection channel 322 and the first board 100 (the surface where the sample injection port 321 locates/the upper surface of the substrate) may form a sharp angle θ. In some embodiments, the angle θ is preferably 20-60°.

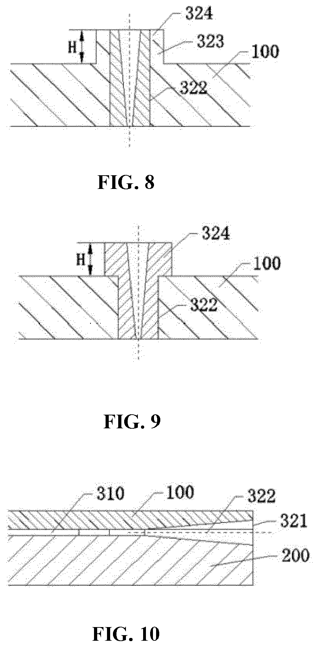

In some embodiments, as shown in FIG. 10, the sample injection port 321 and the sample injection channel 322 may be arranged between the first board 100 and the second board 200. In some embodiments, on the surface of the sample injection port 321, that is, the corresponding side wall of the substrate where the sample injection port 321 is disposed, the axis of the sample injection channel 322 may be perpendicular to the side wall, or the axis of the sample injection channel 322 may be inclined to the side wall. Specifically, when the sample injection port 321 and the sample injection channel 322 are arranged between the two boards, the substrate may have sufficient depth in the length and width direction. Therefore, arranging the axis of the sample injection channel 322 inclined to or perpendicular to the side wall of the substrate may both make the length of the channel satisfy the requirement for sealing.

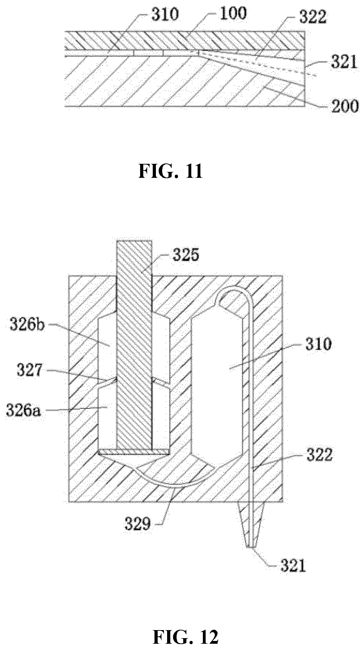

In some embodiments, as shown in FIG. 11, the sample injection port 321 and the sample injection channel 322 may be arranged on the second board 200, on the surface of the sample injection port 321, that is, the corresponding side wall of the substrate where the sample injection port 321 is disposed, so that the axis of the sample injection channel 322 may be inclined to the side wall.

The configuring method of the sample injection port 321 may affect the fitting effect between the sample injection part 320 and the driving force output part of the liquid driving device. In some embodiments, the sample injection port 321 may protrude from the surface where the sample injection port 321 is disposed to ensure the length of the sample injection channel 322, thereby improving the sealing effect. For example, as shown in FIG. 6, the sample injection channel 322 may be arranged obliquely on the first board 100, and the sample injection part 320 may make the sample injection port 321 protrude from the first board 100 by configuring a flange 323 to extend the length of the sample injection channel 322. For example, as shown in FIG. 8, the sample injection channel 322 may be configured perpendicularly on the first board 100, and the sample injection part 320 may make the sample injection port 321 protrude from the first board 100 by configuring a flange 323. In some embodiments, the sample injection port 321 may preferably protrude from the first board 100; the height H of the sample injection port 321 protruding from the first board 100 may be 0.5-3mm.

The shape of the sample injection port 321 may affect the fitting effect between the sample injection part 320 and the driving force output part of the liquid driving device. In some embodiments, the sample injection port 321 may be oval on the surface of the sample injection port 321. For example, as shown in FIG. 1 and FIG. 2, the sample injection port 321 may be disposed on the first board 100 (on the surface of the substrate), and the shape of the sample injection port 321 on a cross-section parallel to the first plate 100 may be an oval. Specifically, the sample injection port 321 of the oval cross-section may be suitable for the situation where the opening surface of the sample injection channel 322 is inclined to the opening surface of the injection port 321. In some embodiments, on the opening surface of the sample injection port 321, the length of the short axis of the oval sample injection port 321 may be between 0.5-4mm. In some embodiments, the sample injection port 321 may be circular on the opening surface of the sample injection port 321. For example, the sample injection port 321 may be disposed on the first board 100, and the shape of the sample injection port 321 on the cross-section parallel to the first board 100 may be a circle. Specifically, the sample injection port 321 if the circular cross-section may be suitable for the may be suitable for the situation where the opening of the sample injection channel 322 is perpendicular to the opening surface of the sample injection port 321. In some embodiments, on the opening surface of the sample injection port 321, the diameter of the sample injection port 321 may be between 0.5-4mm.

In some embodiments, a detachable elastic sealing part 324 may be configured in the sample injection channel 322 and/or at the sample injection port 321, so that the sample injection part 320 may fit and seal the driving force output parts of different types of liquid driving devices. After the driving force output part of the liquid driving device is inserted into a through hole of the elastic sealing part, the inner wall of through hole of the elastic sealing part may be deformed to seal and fit the outer wall of the driving force output part to achieve the purpose of adapting to the driving force output parts of different types of liquid driving devices. In some embodiments, the sample injection part 320 may further include the elastic sealing part 324, the elastic sealing part 324 may be provided with a through hole, and the elastic sealing parts 324 may be installed in the sample injection channel 322 and/or at the sample injection port 321. For example, as shown in FIG. 7, the sample injection channel 322 may be provided with the elastic sealing parts 324 inside; as shown in FIG. 8, the sample injection channel 322 and the sample injection port 321 may be provided with the elastic sealing parts 324 inside; as shown in FIG. 9, the elastic sealing parts 324 may be arranged on the sample injection channel 322 and the sample injection port 321 and protruded from the first board 100.

Each detection unit 300 may be pre-embedded with markers. In some embodiments, the markers may be embedded in a cavity of the sample injection part 320 and/or a cavity of the detection pool 310. Through the cooperation of the liquid driving device and the sample injection part 320, at least a part of the marker may be mixed with the sample liquid which enters and leaves the detection pool.
Specifically, through the liquid flow into and outside of the detection pool 310, part of or all of the marker may be mixed into the sample liquid, and a sufficient and uniform mixing effect may be achieved.

In some embodiments, the detection unit 300 may further include an exhaust port 330 which communicates the detection pool 310. Specifically, when the liquid driving device seals with the sample injection part 320, and drives the sample liquid entering and exiting the detection pool 310, the exhaust port 330 may be used to vent the detection pool 310 and balance the air pressure inside and outside the detection pool 310.

This present disclosure further discloses a particle detection device, the device may be provided with a liquid driving device inside that communicates with the detection pool 310, the device may inject through the liquid driving device, and quickly and repeatedly export and import the sample liquid from the detection pool. The particle detection device includes a substrate and one or more detection units 300 set in the substrate. In some embodiments, each detection unit 300 includes the detection pool 310 that can accommodate the sample liquid and the sample injection part 320 that communicates the sample injection pool. The sample injection part 320 may include the liquid driving device, the liquid driving device may be fixed on the substrate and used to drive at least a part of the sample liquid to repeatedly enter and leave the detection pool 310.

The particle detection device may adopt a negative pressure injection mode. Specifically, the liquid driving device may communicate with the detection pool 310 through a corresponding channel, and the liquid driving device forms a negative pressure through suctioning the air in the detection pool 310, so that the sample liquid may be sucked into the detection pool from the sample injection port communicates with the detection pool 310, and achieve a negative pressure injection. In some embodiments, the sample injection part 320 may further include the sample injection port 321 and the sample injection channel 322, the sample injection port 321 may communicate with the detection pool 310 through the sample injection channel 322, and the liquid driving device may communicate with the detection pool 310 through a hybrid channel 329.

Specifically, as shown in FIG. 12, the amount of liquid inlet/outlet of the liquid driving device may be greater than the amount of liquid storage of the detection pool 310. After the sample injection port 321 is immersed in the sample liquid, through the negative pressure provided by the liquid drive device, the sample liquid may enter the detection pool 310 through the sample injection channel 322. When the sample liquid in the detection pool 310 reaches a preset amount, the sample injection may be stopped, and the liquid driving device may continue to provide the negative pressure to make a part of sample liquid to periodically provide a positive pressure and the negative pressure of a preset amount after entering the hybrid channel 329, so that the sample liquid may reciprocating flow between the hybrid channel 329 and the detection pool 310, and the sample liquid may repeatedly enter and leave the detection pool 310. The liquid flow generated thereof may promote the mixture of the sample liquid and the marker pre-embedded in the detection unit 300.

In some embodiments, the liquid driving device may preferably be a plunger pump. In some embodiments, further, the plunger pump includes a plunger 325 and a plunger cavity set in the substrate. One end of the plunger 325 may extend out of the substrate, and the plunger cavity may communicate with the detection pool 310 through the hybrid channel 329.

In some embodiments, further, the plunger cavity may be provided with an elastic separation valve 327, and the separation valve 327 may separate plunger cavity into a first plunger cavity 326a and a second plunger cavity 326b. Further, the first plunger cavity 326a may communicate with the detection pool 310 through the hybrid channel 329, and the amount of liquid inlet of the first plunger cavity 326a may be greater than or equal to the storage volume of the detection pool 310. Specifically, during the negative pressure injection process, when the plunger head touches the separation valve 327 and feels a resistance, the injection may be stopped. The plunger 325 may continue to be pulled so that the plunger head may enter the second plunger cavity 326b, and the plunger 325 may move back and forth within the second plunger cavity 326b, which makes the sample liquid reciprocating flow between the detection pool 310 and the first plunger cavity 326a, so that the marker and the sample liquid may be fully mixed.

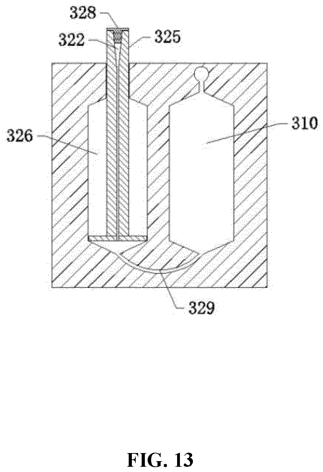

The particle detection device may further adopt a positive pressure injection mode. Specifically, the liquid driving device may communicate with the detection pool 310 through a corresponding channel, and the liquid driving device may import the sample liquid to the detection pool through directly applying the positive pressure to the sample liquid, so as to achieve the positive pressure injection. In some embodiments, as shown in FIG. 13, the sample injection part 320 further includes the sample injection port 321 and the sample injection channel 322, the liquid driving device may communicate with the detection pool 310 through the hybrid channel 329, the sample injection port 321 may communicate with the detection pool 310 through the sample injection channel 322 and the liquid driving device.

In some embodiments, the liquid driving device may preferably be the plunger pump. In some embodiments, further, the plunger pump includes the plunger 325 and the plunger cavity 326 set in the substrate. One end of the plunger 325 may extend out of the substrate, and the plunger cavity 326 may communicate with the detection pool 310 through the hybrid channel 329. In some embodiments, the sample injection port 321 may be disposed on the end of the plunger 325 extended out of the substrate, the sample injection channel 322 may be set in the plunger 325, and the sample injection channel 322 may communicate with the detection pool 310 through the plunger cavity 326. In some embodiments, preferably, a dismountable sealing plug 328 may be set on the sample injection port 321.

In some embodiments, the detection unit 300 further includes the exhaust port 330 communicating with the detection pool 310. The exhaust port 330 may be used for ventilation, so that the air pressure inside and outside the detection pool 310 may remain balanced.

Specifically, as shown in FIG. 13, the sample injection device may introduce the sample liquid to the detection pool through the sample injection port 321, the sample injection channel 322, the plunger cavity 326, and the hybrid channel 329 in sequence. After completing the sample injection, the sample injection port 321 may be blocked, and the plunger 325 may be pulled to provide the liquid driving force, so that the sample liquid may reciprocating flow between the plunger cavity 326 and the detection pool 310, the sample liquid may enter and leave the detection pool 310 repeatedly to make the sample liquid fully mixed with the marker.

Other structures of the particle detection device may be similar to the aforementioned particle detection device, such as the substrate structure, etc. The detailed information may be found in other parts of the present disclosure, which will not be repeated here.

The present disclosure further discloses an operation method of the particle detection device, which can be applied to the aforementioned particle detection device. The operation method may quickly realize the repeated import and export of the sample liquid from the detection pool by sealing the sample injection part with the liquid driving device of the particle detection device. The above operation method may include:
introducing the sample liquid to the detection pool through the sample injection part;
providing the liquid driving force by sealing the liquid driving device of the sample injection part to enable at least a part of the sample liquid to enter and leave the detection pool repeatedly; and
driving the sample liquid to the detection pool again through an auxiliary driver.

In some embodiments, the liquid driving device may drive at least a part of the sample liquid to repeatedly enter and leave the detection pool for at least once, so that at least a part of the marker pre-embedded in the detection unit may be mixed with the sample liquid. Preferably, the marker may be embedded in the sample injection part and/or the detection pool. Specifically, the liquid driving device may provide positive and negative pressures alternately, and the sealing between the liquid driving device and the sample injection part may make the positive and negative pressures provided effectively act on the sample liquid, so that the sample liquid may flow back and forth between the sample injection part and the detection pool. A part of or all the sample liquid may enter the detection pool repeatedly for once or more, which can make the pre-embedded markers quickly, fully, and uniformly mix with the sample liquid.

In some embodiments, the driving force output part of the liquid driving device may be inserted into and pressed against the sample injection part, so that the liquid driving device may be sealed with the sample injection part. In some embodiments, the liquid driving device may be a device with positive and negative pressure control; the device with positive and negative pressure control may be one of a pipette, a syringe and an ear wash ball.

For example, the liquid driving device may be the pipette. The head of the pipette may be inserted into and pressed against the sample injection part, so that the liquid driving device may be sealed with the sample injection part. After introducing the sample liquid into the detection pool, a control button may be repeatedly pressed to provide alternate positive and negative pressures of the liquid driving force, so that the sample liquid may repeatedly enter and leave the detection pool, and the sample liquid and the marker may be quickly and uniformly mixed.

For example, the liquid driving device may be a syringe. The injection head of the syringe may be inserted into and pressed against the sample injection part, so that the liquid driving device may be sealed with the sample injection part. After introducing the sample liquid into the detection pool, a plunger rod of the syringe may be repeatedly pulled to provide alternate positive and negative pressures of the liquid driving force, so that the sample liquid may repeatedly enter and leave the detection pool, and the sample liquid and the marker may be quickly and uniformly mixed.

In some embodiments, the liquid driving device may be fixed on the particle detection device, and the liquid driving device may be directly or indirectly sealed with the sample injection part

The possible beneficial effect brought by the embodiments of the present disclosure may include but not limited to: in the current techniques, due to the depth factor of the detection pool, a surface tension of the liquid in the detection pool may be large. Once the sample liquid enters the detection pool, it may be difficult to suck the liquid out. Compared with the current techniques, the particle detection device of the present disclosure may seal the sample injection part and the liquid driving device through configuring the structure of the sample injection part, thereby allowing the sample liquid to enter and leave the detection pool through the cooperation between the sample injection part and the liquid driving device, and quickly performing the inlet and outlet of the sample liquid. In some application scenarios, such as when the markers are pre-embedded in the particle detection device, the sealing and the cooperation between the sample injection part and the liquid driving device make the sample liquid enter and leave the detection pool repeatedly, so that he marker and the sample liquid may be quickly and uniformly mixed. It should be noted that different embodiments may have different beneficial effects, in different embodiments, the beneficial effects generated may be any one above or combinations thereof, or may be any other possible beneficial effects achieved.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures or characteristics may be combined as suitable in one or more embodiments of the present disclosure.

## Claims

1. A particle detection device, including a substrate and at least one detection unit arranged on the substrate, wherein the at least one detection unit comprises:
a detection pool, configured to accommodate a sample liquid;
a sample injection part communicating the detection pool, the sample injection part being sealable with a liquid driving device, wherein the liquid driving device and the sample injection part cooperate to enable the sample liquid to get in and out of the detection pool.

2. The particle detection device of claim 1, wherein the sample injection part includes a sample injection channel and a sample injection port, the sample injection port communicating the detection pool through the sample injection channel.

3. The particle detection device of claim 2, wherein an inner diameter of the sample injection channel gradually decreases along a direction from the sample injection port to the detection pool.

4. The particle detection device of claims 2 or 3, wherein
the substrate includes a first board and a second board;
the detection pool is configured on the second board;
the sample injection port is configured on the second board; and
the sample injection channel is configured on the second board, or the sample injection channel is configured on the first board and the second board.

5. The particle detection device of claims 2 or 3, wherein
the substrate includes a first board and a second board;
the detection pool is configured on the second board;
the sample injection port is configured on the first board; and
the sample injection channel is configured on the first board, or the sample injection channel is configured on the first board and the second board.

6. The particle detection device of claim 4 or claim 5, wherein an axis of the sample injection channel forms a 20-60° angle with the first board, or the axis of the sample injection channel forms a 20-60° angle with the second board.

7. The particle detection device of any one of claims 4-6, wherein
the first board and the second board are sealed,
the detection pool is between the first board and the second board,
the sample injection channel communicates with the detection pool and the sample injection port.

8. The particle detection device of any one of claims 1-7, wherein the liquid driving device is a portion of the particle detection device, and the liquid driving device includes a cavity, wherein a separation valve disposed in the cavity separates the cavity into a first cavity and a second cavity.

9. The particle detection device of any one of claims 2-8, wherein the sample injection port protrudes from a surface where the sample injection port is disposed, wherein the height of the sample injection port protruding from the surface is 0.5mm-3mm.

10. The particle detection device of any one of claims 2-9, wherein the sample injection part further includes an elastomer sealing part, wherein
the elastomer sealing part is provided with a through hole, and
the elastomer sealing part is installed on the sample injection channel and/or the sample injection port.

11. The particle detection device of any one of claims 1-10, wherein a depth of the detection pool is less than 2mm.

12. The particle detection device of any one of claims 1-11, wherein the sample injection part and/or the detection pool includes a cavity configured to pre-embed a marker, wherein through the coorperation of the liquid driving device and the sample injection part, at least a part of the marker is mixed with the sample liquid which gets in and out of the detection pool.

13. An operation method of the particle detection device of any of the claims 1-12, comprising:
introducing the sample liquid to the detection pool through the sample injection part;
providing a liquid driving force by connecting the liquid driving device with the sample injection part in a sealed state to enable at least a part of the sample liquid to get in and out of the detection pool repeatedly; and
driving the sample liquid to the detection pool again through the liquid driving device.

14. The operation method of claim 13, wherein a driving force output part of the liquid driving device is inserted into and pressed against the sample injection part, so that the liquid driving device is connected with the sample injection part in the sealed state.

15. The operation method of claim 13 or claim 14, wherein the liquid driving device drives the at least a part of the sample liquid to repeatedly get in and out of the detection pool for at least once, so that the sample liquid is mixed with at least a part of a marker pre-embedded in the sample injection part and/or the detection pool.
